# EUROPEAN PATENT APPLICATION

(11) **EP 3 916 626 A1**
(43) Date of publication of application: **01.12.2021**
(21) Application number: 20315289.7
(22) Date of filing: 29.05.2020
(51) Int. Cl.: G06K 9/00, G06K 9/62, G06N 3/04, G06N 3/08

(54) **COMPUTER-IMPLEMENTED METHOD FOR MULTIMODAL EGOCENTRIC FUTURE PREDICTION**

(71) Applicant: IMRA Europe SAS, 06560 Valbonne (FR); Albert-Ludwigs-Universität Freiburg, 79098 Freiburg (DE)
(72) Inventor: Makansi, Osama, 79114 Freiburg (DE); Özgün, Cicek, 79106 Freiburg (DE); Brox, Thomas, 79108 Freiburg (DE); Buchichio, Kévin, 06220 Vallauris (FR); Abad, Frédéric, 06220 Vallauris (FR); Bendahan, Rémy, 06160 Juan LES Pins (FR)
(74) Representative: Vigand, Philippe

(57) **Abstract**

A computer-implemented method for multimodal egocentric future prediction in a driving environment of an autonomous vehicle (AV) or an advanced driver assistance system (ADAS) equipped with a camera and comprising a trained reachability prior deep neural network (RPN), a trained reachability transfer deep neural network (RTN) and a trained future localization deep neural network (FLN) and/or a trained future emergence prediction deep neural network (EPN).

## Description

### FIELD OF THE DISCLOSURE

The present disclosure relates to a computer-implemented method for multimodal egocentric future prediction and/or future emergence in a driving environment of an autonomous vehicle (AV) or an advanced driver assistance system (ADAS) equipped with a camera.

Such methods are useful especially in the field of assisting human drivers, advanced driver assistance systems or autonomous vehicles using cameras to perceive and interpret its surroundings.

### BACKGROUND OF THE DISCLOSURE

The problem of anticipating future dynamics, particularly the future location of other vehicles and pedestrians, in the view of a moving vehicle. raises important challenges such as (1) the partial visibility due to the egocentric view with a single camera and considerable field-of-view change due to the egomotion of the vehicle; and (2) the multimodality of the distribution of future states.

In the publication entitled "Risky Region Localization With Point Supervision" (http://openaccess.thecvf.com/content ICCV 2017 workshops/w3/html/Kozu ka Risky Region Localization ICCV 2017 paper.html), the presented work proposes a method for detecting regions with potential risk from images, meaning areas where a pedestrian is most likely to appear. The purpose here is to build a dense risk map from automatic generation of pairwise ordinal relations of risk between pixels using a priori knowledge from semantic map, so they can evaluate the risk of a pedestrian rushing out from behind an obstacle finding pixels with high likelihood that will be occupied by a pedestrian shortly. This method is restricted only to pedestrians and this solution-presents bad results when turning a corner due to lack of training samples. Due to the lack of data, this method does not predict the trajectory of suddenly appearing pedestrians. They tried to incorporate this prediction into risk level prediction. Thus, their method predicts only an area where a suddenly appearing pedestrian may appear instead of its future trajectory.

In the publication entitled "Set-Based Prediction of Pedestrians in Urban Environments Considering Formalized Traffic Rules" (https://www.researchqate.net/publication/327690859 Set-Based Prediction of Pedestrians in Urban Environments Considering For malized Traffic Rules), the presented work proposes an approach for set-based predictions of pedestrians, i.e. prediction of a bounded region including all possible future states of nondeterministic models of pedestrians, using reachability analysis. They incorporate the dynamics of pedestrians, contextual information and traffic rules, to obtain a tight over-approximations of pedestrians' reachable occupancy. In addition, their constraints automatically adapt to the fact that pedestrians often disregard traffic rules, to include it in the prediction. This method is restricted only to pedestrians and this method is only based on fixed top-view images and doesn't handle egomotion and evolution of the scene.

In the publication entitled "Context-Aware Synthesis and Placement of Object Instances" (https://papers.nips.cc/paper/8240-context-aware-synthesis-and-placement-of-object-instances.pdf), the presented work proposes an end-to-end trainable neural network for the task of inserting an object instance mask of a specified class into the semantic label map of an image. This network consists of two generative modules where one determines where the inserted object mask should be (i.e. location and scale) and the other determines what the object mask shape (and pose) should look like. The two modules are connected together via a spatial transformation network and trained jointly. This method estimates emergence of objects only at a current time and doesn't use such information for future localization prediction.

In the publication entitled "Overcoming Limitations of Mixture Density Networks: A sampling and fitting framework for Multimodal Future Prediction" (https://arxiv.org/pdf/1906.03631.pdf), the presented work proposes an approach that involves the prediction of several samples of the future with a winner-takes-all loss and iterative grouping of samples to multiple modes. This work proposes a network architecture based on Evolving Winer-Takes-All, a proposed strategy. This method is based on top-view images with fixed camera, not taking into account the front-view with egomotion compensation required, at first stage. This method does not predict the future emergence of not seen yet objects, only the future localization prediction of observable objects.

In the publication entitled "Forecasting Hands and Objects in Future Frames" (http://openaccess.thecvf.com/content ECCVW 2018/papers/11131/Fan For ecastinq Hands and Objects in Future Frames ECCVW 2018 paper.pdf) , the presented work proposes an approach to explicitly forecast human hands and objects using a fully convolutional future representation regression network. This method based on a detection model, encodes the feature representation of a scene, then predicts the evolution through time of this encoded feature representation, and finally re-uses the detection model to decode this feature representation doing so a detection of given objects in this future scene. So, they suggest to transfer current object detection features to the future, this way they anticipate both observed and new objects. By doing so, they encode completely the scene and use this transfer of encoded feature representation to detect new objects in the future, there is no tracking of already identified objects for future localization prediction as their scene encoding contains information about individual objects separated from the background without specific ID. Also, this future localization/emergence prediction, as based on a detection model, only outputs a given object without any multimodality. Finally, this future localization/emergence prediction of individual objects can only be done with a complete knowledge of the full future scene acquired with this encoded feature representation of future scene. This method will predict the future position of all objects, not only specific classes.

In the publication EP3048023A1, the disclosure proposes a method for assisting a driver in driving an ego vehicle. A representation of the environment is generated from sensor data acquired, as a plurality of representation segments each of which corresponds to a limited area of the environment. Then a future and/or past movement behavior for a traffic object is estimated and a characteristic information is inferred for a given area, which will be used to define the preferred path of ego vehicle. This disclosure does not predict the future emergence of new objects. This invention is restricted only to cars for lane changing prediction in top-view images to predict the path for the ego-vehicle in a road with other cars involved in. This invention uses a multitude of sensors (3D sensors) to map all information and predict the future trajectory of other cars.

In the publication US9248834B1, the disclosure proposes a method to detect and respond to objects in a vehicle's environment by generating a set of possible actions for the objects using map information describing the environment. A set of possible future trajectories of the objects can then be generated based on the set of possible actions. This disclosure does not predict the future emergence of new objects. This disclosure is based on highly detailed map of the environment to predict future trajectories of objects.

### SUMMARY OF THE DISCLOSURE

The present disclosure aims to address the above-mentioned drawbacks of the different prior arts, and more particularly to propose a reliable method for multimodal egocentric future localization and/or future emergence prediction in a unified framework.

A first aspect of the disclosure relates to a computer-implemented method for multimodal egocentric future prediction in a driving environment of an autonomous vehicle (AV) or an advanced driver assistance system (ADAS) equipped with a camera and comprising a trained reachability prior deep neural network (RPN), a trained reachability transfer deep neural network (RTN) and a trained future localization deep neural network (FLN) and/or a trained future emergence prediction deep neural network (EPN), the method comprising an inference mode with the steps of: observing at a given time step (t) through an egocentric vision of the camera, images from the driving environment; obtaining a semantic map of static elements in the observed images; estimating with the RPN, a reachability prior (RP) for a given class of dynamic objects of interest from the semantic map of the static elements; transferring with the RTN, the RP to a future time step (t+Δt) taking into account a planned egomotion of the camera, in the form of a reachability map (RM); and predicting with the FLN, multimodal egocentric future locations of the dynamic objects of interest based on past and current observation (t-δt to t) of the driving environment constrained by the RM; and/or predicting with the EPN, future emergence of new dynamic objects of interest in the driving environment based on past and current observation (t-δt to t) of the driving environment constrained by the RM.

Such method is predicting future locations of dynamic objects (e.g. traffic objects) in egocentric views without predefined assumptions on the scene or knowledge from maps and by taking into account the multimodality of the future. It only needs a single camera (e.g. RGB camera) instead of complex and/or expensive 3D sensors, radar, LIDAR, etc. to cope with ego view and without any previous knowledge of the environment. The reachability prior and multi-hypotheses learning help overcome mode collapse and improve multimodal prediction of the future location of tracked objects. It also demonstrates promising zero-shot transfer to unseen datasets. This method by using reachability prior to improve future prediction for front-view images acquired from a car, tackles the issue of scene evolution, compensates the egomotion and the future scenes. It only uses the knowledge acquired from the current location of accessible areas for future objects of a given class, which can be any class of moving objects (pedestrian, car, bicycle, motorcycle, ...). This way, we do not encode totally the future scene representation and use the knowledge acquired from past to define the future localization (or emergence) taking time continuity as input, being by the way more robust, with less error-prone. Also, the reachability maps are based on a given class only, each class having its own reachability map to control the future localization of a specific object. In addition or altinatively to the future prediction of the moving objects of interest, the method also offers a future emergence prediction module for not yet seen objects. Reachability prior is estimated for future position and used to improve the prediction of future positons of objects or emergence of new ones.

According to an advantageous embodiment, the step to obtain the semantic map of static elements comprises the following sub-steps: computing a semantic map of the driving environment from the observed images; inpainting the semantic map of the driving environment to remove dynamic objects; and wherein for the step of estimating the RP, the removed dynamic objects are used as ground-truth.

Since the reachability prior network should learn the relation between a class of objects (e.g, vehicle) and the scene semantics (e.g, road, sidewalk, and so on), we remove all dynamic objects from the training samples. This is achieved by inpainting. Because inpainting on the semantic map causes fewer artifacts, the reachability prior is based on the semantic map.

According to an advantageous embodiment, the predicting step with the FLN takes into account past and current masks (t-δt to t) of each dynamic objects of interest.

According to an advantageous embodiment, the RPN outputs bounding box hypotheses for potential localization of the dynamic objects of interest of the given class at the time step (t) in the form of the reachability prior (RP) and the RTN outputs bounding box hypotheses for potential localization of the dynamic objects of interest of the given class at the future time step (t+Δt) in the form of the reachability map (RM).

Bounding boxes are used for tracking different types of traffic objects and to estimate the egomotion, we use a standard method which computes the egomotion from the RGB images only.

According to an advantageous embodiment, the predicting step with the EPN takes into account the classes of dynamic objects of interest.

According to an advantageous embodiment, the EPN predicts future emergence of new dynamic objects of interest in the driving environment in a unified framework with the FLN prediction.

The method proposes a unified framework for future localization and future emergence, with or without reachability maps. In this manner, the method can predict future emergence without future environmental knowledge previously acquired. And it can either predict future localization of seen objects, or emergence of new objects.

According to an advantageous embodiment, the method comprising a training mode prior to the inference mode with the steps of: training the RPN with training samples to learn the relation between dynamic objects of interest of a given class and static elements of a semantic map by generating multiple bounding box hypotheses for potential localization of the dynamic objects of interest of the given class in the form of a reachability prior (RP); training the RTN by transferring the RP into a future time step (t+ Δt), given the training samples, the semantic map of static elements and the planned egomotion, and generating multiple bounding box hypotheses for potential localization of the given class of dynamic objects of interest at the future time step (t+Δt) in the form of the reachability map (RM).

According to an advantageous embodiment, the RPN training further comprises the steps of: removing all classes of dynamic objects from the semantic map of training samples with an inpainting method; and using removed dynamic objects of interest as ground-truth samples for defining the RP.

According to an advantageous embodiment, the RTN training further comprises the step of: for each training batch, passing both RPN and RTN for forward pass and when back-propagating the gradient, passing only for the RTN, while fixing the weights of the RPN; and obtaining the ground-truths in a self-supervised manner by running the RPN on the semantic map of static elements of the samples at the future time step (t+Δt).

According to an advantageous embodiment, the training mode further comprises the step of: training the FLN to predict for the training samples a multimodal distribution of the future bounding boxes of the dynamic objects of interest taking into account past and current masks (t-δt to t) of the dynamic objects of interest; and for each training batch, passing the RPN, RTN and FLN for forward pass and when back-propagating the gradient, passing only for the FLN, while fixing the weights of the RPN and RTN.

According to an advantageous embodiment, the training mode further comprises the step of: training the EPN, to predict for the training samples a multimodal distribution of the future bounding boxes of the emergence of dynamic objects of interest without taking into account past and current masks of the dynamic objects of interest; and for each training batch, passing the RPN, RTN and EPN for forward pass and when back-propagating the gradient, passing only for the EPN, while fixing the weights of the RPN and RTN.

According to an advantageous embodiment, the FLN training and the EPN training are performed in a unified framework.

According to an advantageous embodiment, the RPN, RTN, FLN or EPN training further comprises the step of: generating the multiple bounding box hypotheses, using an Evolving Winer-Takes-All (EWTA) scheme.

The method using an ETWA is more specifically designed to tackle front-view images scene, considerably improving the quality of future prediction in front-view images.

A second aspect of the disclosure relates to a computer-implemented method for assisting a human driver to drive a vehicle or for assisting an advanced driver assistance system or for assisting an autonomous driving system, equipped with a camera, the method comprising the steps of: observing through an egocentric vision of the camera, images of a driving environment while the vehicle is driven; obtaining multi-modality images from the observed images and extracting past and current trajectory of dynamic objects of interest based on past and current observation; supplying said multi-modality images and past and current trajectories to the computer implemented method according to the first aspect; displaying to a driver's attention multiple predicted future trajectories of a moving object of interest and/or future emergence of new moving objects of interest, or providing to the advanced driver assistance system or autonomous driving system, said multiple predicted future trajectories of a moving object of interest and/or future emergence of new moving objects of interest.

### BRIEF DESCRIPTION OF THE DRAWINGS

Other features and advantages of the present disclosure will appear more clearly from the following detailed description of particular non-limitative examples of the disclosure, illustrated by the appended drawings where:
- Figure 1 represents an overview of the overall future localization framework according to a preferred embodiment of the present disclosure.
- Figure 2 shows an example on a driving environment taken from an existing dataset and processed by a future prediction method of the disclosure;
- Figure 3 shows a driving environment processed through the future localization network and/or the emergence prediction network of the disclosure.

### DETAILED DESCRIPTION OF THE DISCLOSURE

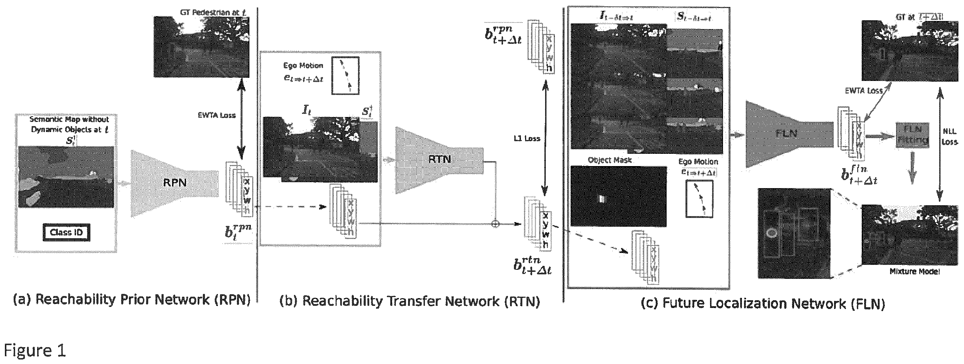

Figure 1 represents an overview of the overall future localization framework according to a preferred embodiment of the present disclosure. It shows the pipeline of the framework for the future localization task consisting of three main modules: (1) reachability prior network (RPN), which learns a prior of where members of an object class could be located in semantic map, (2) reachability transfer network (RTN), which transfers the reachability prior from the current to a future time step taking into account the planned egomotion, and (3) future localization network (FLN), which is conditioned on the past and current observations of an object and learns to predict a multimodal distribution of its future location based on the general solution from the RTN. Rather than predicting the future of a seen object, the emergence prediction network predicts where an unseen object can emerge in the future scene. Emergence prediction shares the same first two modules and differs only in the third network where we drop the condition on the past object trajectory. We refer to it as emergence prediction network (EPN). The aim of EPN is to learn a multimodal distribution of where objects of a class emerge in the future.

It can be split in three stages (a), (b) and (c) and a fourth stage (d) which are hereinafter. Stage (d) is not shown on figure 1.

The first stage (a) relates to the reachability prior network (RPN). The RPN learns the relation between objects of a given class ID (e.g. moving objects such as pedestrians, cycles, cars, etc.) and the static elements of a semantic map by generating multiple bounding box hypotheses. In another words, it predicts reachability bounding box hypotheses at a current time. The RPN inputs are a semantic map of static environment at time t, i.e. static elements in the observed images, and at least a given class of moving objects of interest to be tracked. The RPN outputs bounding boxes hypotheses for potential localization of the given class, so-called reachability prior (RP).

The core of this first stage (a) is to create a reachability prior (RP), i.e. reachability map at the present time, for future prediction, i.e. bounding boxes in future image corresponding to areas where an object of a given class can be located. This RP is computed at the present time (time step t) with the RPN. The usage of a reachability prior focuses the attention of the prediction based on the environment, it helps overcome the mode collapse/forgetting and increase the diversity.

The second stage (b) relates to the reachability transfer network (RTN). The RTN transfers the reachability prior into the future given the observed image, its semantic, and the planned egomotion. The ground truth for training this network is obtained in a self-supervised manner by running RPN on the future static semantic map. The RTN inputs are an image at a time t, the semantic map of static environment at the time t, planned ego-motion from time t to time t+Δt and the RPN output in the form of the RP (i.e. bounding boxes hypotheses). The RTN outputs bounding boxes hypotheses for potential localization of the given class at time t+Δt, so-called reachability map (RM).

This RP is next predicted at a future time horizon (time step t+Δt) with the RTN so as to generate a reachability map (RM) at the future horizon t+Δt. The RTN uses a deep neural network taking as input the generated reachability prior map of present time in stage (a) and some information of the scene and own trajectory to predict the future reachability map (i.e. at time step t+Δt).

The third stage (c) relates to the future localization network (FLN). The FLN yields a multimodal distribution of the future bounding boxes of the object of interest through a sampling network (to generate multiple bounding boxes in the form of samples) and then a fitting network to fit the samples to a Gaussian mixture model. This is shown as a heatmap overlayed on the future image with the means of the mixture components shown as green bounding boxes. FLN inputs are past images from time t-δt to time t, past semantic maps of dynamic environment from time t-δt to time t, past masks of the object of interest from time t-δt to time t, ego-motion from time t to time t+Δt and the RTN output in the form of the RM (i.e. bounding boxes hypotheses at time t+Δt).The FLN outputs bounding boxes hypotheses for localization of a given object of interest at time t+Δt with a Gaussian mixture distribution of future localizations of the given object of interest at time t+Δt.

The future reachability map (RM) received from the RTN is then used to improve the quality of future predictions when combined with the FLN. This knowledge acquired with the reachability map considerably improves the predictions of the FLN, which is implemented in a way to be conditioned on the past and current observation and constrained by the reachability maps computed before.

A fourth stage (d) which is not represented on Figure 1 relates to an Emergence Prediction Network (EPN). The EPN is identical to the FLN, except that it lacks the object-of-interest masks in the input. The purpose of the EPN is to predict emergence of new objects in the future, i.e. the future apparition of objects that are not present in the scene. Stage (d) can be either added to stage (c) so as to predict the future localization of moving objects of interest and predict emergence of new objects, or replacing stage (c) so as to be in an emergence prediction mode only.

Based on the same architecture of the FLN, the EPN predicts the emergence of new classes by not constraining the future prediction with past objects masks. Here again, the reachability map considerably improves the quality of emergence prediction.

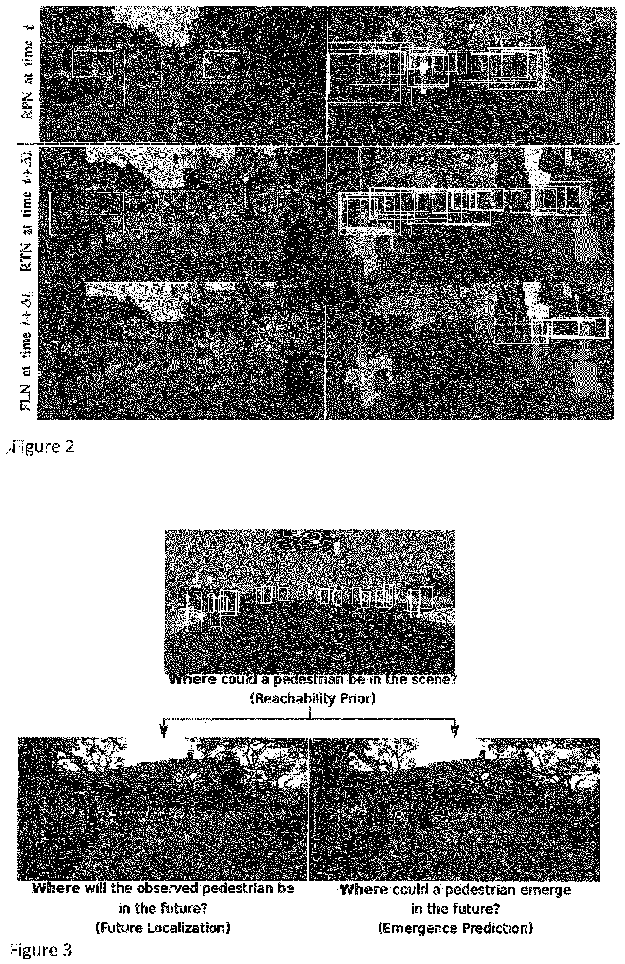

Figure 2 shows an example on a driving environment taken from an existing dataset and processed by a future prediction method of the disclosure.

On the left side are shown the images while on the right side are shown the semantic domains. On both bounding box hypotheses have been added for clarity. On top, it shows for the RPN, the reachability prior for the class car in the current time step. In the middle, it shows for the RTN, the reachability prior transferred to the future. On the bottom, it shows for the FLN, the final future localization further conditioned on a specific instance. Note that none of the networks (RPN, RTN, FLN) has access to the future image or its semantic map (at time t+Δt).

Figure 3 shows a driving environment processed through the future localization network and/or the emergence prediction network of the disclosure. It creates a reachability prior corresponding to potential positions of a pedestrian in a scene. Using this prior knowledge, we are then able to improve the prediction of future localization of a pedestrian or emergence of new pedestrians.

On top (corresponding to stage (a+b)), the reachability prior (white rectangles) answers the general question of where a pedestrian could be in a scene. On the left (corresponding to stage (c)), future localization (green rectangles) of a particular pedestrian crossing the street narrows down the solution from the reachability prior by conditioning the solution on past and current observations. The true future is shown as purple box. On the right (corresponding to stage (d)), the emergence prediction (green rectangles) shows where a pedestrian could suddenly appear in the future and narrows down the solution from the reachability prior by conditioning the solution on the current observation of the scene.

### Training mode

The training mode is itself decomposed into 3 different training stages done sequentially. A fourth stage can be added for the emergence prediction.

Stage A - We first train the Reachability Prior Network (RPN) by removing all dynamic classes from the semantic maps (computed from images) of training samples using an inpainting method. The static semantic segmentation is the input to the network, and the removed objects of class c are ground-truth samples for the reachability. The network, generating multiple hypotheses, is trained using the Evolving Winer-Takes-All scheme.

Stage B - We then train the Reachability Transfer Network (RTN) while fixing RPN, i.e. for each training batch, we pass the 2 networks RPN and RTN for forward pass but when back-propagating the gradient we do it only for RTN, thus fixing the weights of RPN. The ground truth for training this network is obtained in a self-supervised manner by running RPN on the future static semantic maps.

Stage C. Finally, we train the Future Localization Network while fixing both RPN and RTN, i.e. for each training batch, we pass the 3 networks RPN, RTN and FLN for forward pass but when back-propagating the gradient we do it only for FLN, thus fixing the weights of RPN and RTN. The network is trained with Evolving Winer Takes All just like RPN.

Stage D - We use the same methodology for training the Emergence Prediction Network by just replacing this last step.

### Inference mode

At inference time, when an input trajectory is observed and we want to predict its multiple possible futures, the inference mode for Future Localization system (for already seen objects) is decomposed into 3 different stages, as it is illustrated in Figure 1. A fourth stage can be added for the emergence prediction.

Stage A - First for an observed object in a given environment, we calculate the reachability map associated to the class of this object. It means for a given object bounding box in a scene for which we have the corresponding static semantic map (the semantic map of all static classes, so environmental elements only, the moving ones like pedestrians and cars being removed by an inpainting method), the system is able to learn the relation between objects of a certain class and the static elements of a semantic map by generating multiple bounding box hypotheses for potential localization of such class object.

Stage B - Then, given these multiple bounding box hypotheses generated, the Reachability Transfer Network transfers this reachability prior from the current to a future time step by taking into account the planned egomotion. Given as input the bounding boxes of reachability at current time, the planned ego-motion, the future images and future static semantic maps, the system is able to generate the bounding boxes of reachability in the future.

Stage C - Finally, given the past and current observations of an object, the Future Localization Network learns to predict a multimodal distribution of its future location, based on the general solution of RTN, through a sampling network (to generate multiple bounding boxes, i.e. samples) and then a fitting network to fit the samples to a Gaussian mixture model (shown as heatmap overlaid on the future image with the means of the mixture components shown as green bounding boxes).

Stage D - The Emergence Prediction of future objects follows the same procedure with the same A and B steps, only the C step is replaced by an Emergence Prediction Network which is identical to the Future Localization Network, except that it lacks the object-of-interest masks in the input.

It will be understood that various modifications and/or improvements evident to those skilled in the art can be brought to the different embodiments of the disclosure described in the present description without departing from the scope of the disclosure defined by the accompanying claims.

## Claims

1. A computer-implemented method for multimodal egocentric future prediction in a driving environment of an autonomous vehicle (AV) or an advanced driver assistance system (ADAS) equipped with a camera and comprising a trained reachability prior deep neural network (RPN), a trained reachability transfer deep neural network (RTN) and a trained future localization deep neural network (FLN) and/or a trained future emergence prediction deep neural network (EPN), the method comprising an inference mode with the steps of:
- observing at a given time step (t) through an egocentric vision of the camera, images from the driving environment;
- obtaining a semantic map of static elements in the observed images;
- estimating with the RPN, a reachability prior (RP) for a given class of dynamic objects of interest from the semantic map of the static elements;
- transferring with the RTN, the RP to a future time step (t+Δt) taking into account a planned egomotion of the camera in the form of a reachability map (RM); and
- predicting with the FLN, multimodal egocentric future locations of the dynamic objects of interest based on past and current observation (t-δt to t) of the driving environment constrained by the RM; and/or
- predicting with the EPN, future emergence of new dynamic objects of interest in the driving environment based on past and current observation (t-δt to t) of the driving environment constrained by the RM.

2. The computer-implemented method of claim 1, wherein the step to obtain the semantic map of static elements comprises the following sub-steps:
- computing a semantic map of the driving environment from the observed images;
- inpainting the semantic map of the driving environment to remove dynamic objects;
and wherein for the step of estimating the RP, the removed dynamic objects are used as ground-truth.

3. The computer-implemented method of claim 1 or 2, wherein the predicting step with the FLN takes into account past and current masks (t-δt to t) of each dynamic objects of interest.

4. The computer-implemented method of any of claims 1 to 3, wherein the RPN outputs bounding box hypotheses for potential localization of the dynamic objects of interest of the given class at the time step (t) in the form of the reachability prior (RP) and the RTN outputs bounding box hypotheses for potential localization of the dynamic objects of interest of the given class at the future time step (t+Δt) in the form of the reachability map (RM).

5. The computer-implemented method of any of claims 1 to 4, where the predicting step with the EPN takes into account the classes of dynamic objects of interest.

6. The computer-implemented method of any of claims 1 to 5, wherein the EPN predicts future emergence of new dynamic objects of interest in the driving environment in a unified framework with the FLN prediction.

7. The computer-implemented method of any of claims 1 to 6, the method comprising a training mode prior to the inference mode with the steps of:
- training the RPN with training samples to learn the relation between dynamic objects of interest of a given class and static elements of a semantic map by generating multiple bounding box hypotheses for potential localization of the dynamic objects of interest of the given class in the form of a reachability prior (RP);
- training the RTN by transferring the RP into a future time step (t+ Δt), given the training samples, the semantic map of static elements and the planned egomotion, and generating multiple bounding box hypotheses for potential localization of the given class of dynamic objects of interest at the future time step (t+Δt) in the form of the reachability map (RM).

8. The computer-implemented method of claim 7, wherein the RPN training further comprises the steps of:
- removing all classes of dynamic objects from the semantic map of training samples with an inpainting method; and
- using removed dynamic objects of interest as ground-truth samples for defining the RP.

9. The computer-implemented method of claim 7 or 8, wherein the RTN training further comprises the step of:
- for each training batch, passing both RPN and RTN for forward pass and when back-propagating the gradient, passing only for the RTN, while fixing the weights of the RPN; and
- obtaining the ground-truths in a self-supervised manner by running the RPN on the semantic map of static elements of the samples at the future time step (t+Δt).

10. The computer-implemented method of any of claims 7 to 9, wherein the training mode further comprises the step of:
- training the FLN to predict for the training samples a multimodal distribution of the future bounding boxes of the dynamic objects of interest taking into account past and current masks (t-δt to t) of the dynamic objects of interest; and
- for each training batch, passing the RPN, RTN and FLN for forward pass and when back-propagating the gradient, passing only for the FLN, while fixing the weights of the RPN and RTN.

11. The computer-implemented method of any of claims 7 to 10, wherein the training mode further comprises the step of:
- training the EPN, to predict for the training samples a multimodal distribution of the future bounding boxes of the emergence of dynamic objects of interest without taking into account past and current masks of the dynamic objects of interest; and
- for each training batch, passing the RPN, RTN and EPN for forward pass and when back-propagating the gradient, passing only for the EPN, while fixing the weights of the RPN and RTN.

12. The computer-implemented method of claims 10 and 11, wherein the FLN training and the EPN training are performed in a unified framework.

13. The computer-implemented method of any of claims 7 to 12, wherein the RPN, RTN, FLN or EPN training further comprises the step of:
- generating the multiple bounding box hypotheses, using an Evolving Winer-Takes-All (EWTA) scheme.

14. A computer-implemented method for assisting a human driver to drive a vehicle or for assisting an advanced driver assistance system or for assisting an autonomous driving system, equipped with a camera, the method comprising the steps of:
- observing through an egocentric vision of the camera, images of a driving environment while the vehicle is driven;
- obtaining multi-modality images from the observed images and extracting past and current trajectory of dynamic objects of interest based on past and current observation;
- supplying said multi-modality images and past and current trajectories to the computer implemented method according to any of claims 1 to 6;
- displaying to a driver's attention multiple predicted future trajectories of a moving object of interest and/or future emergence of new moving objects of interest, or
- providing to the advanced driver assistance system or autonomous driving system, said multiple predicted future trajectories of a moving object of interest and/or future emergence of new moving objects of interest.
